# EUROPEAN PATENT APPLICATION

(11) **EP 3 182 603 A1**
(43) Date of publication of application: **21.06.2017**
(21) Application number: 15201026.0
(22) Date of filing: 18.12.2015
(51) Int. Cl.: H04B 1/04, H04B 1/18

(54) **AN APPARATUS AND/OR METHOD FOR CONTROLLING AN IMPEDANCE COUPLED TO AN ANTENNA**

(71) Applicant: Nokia Technologies Oy, 02610 Espoo (FI)
(72) Inventor: JUNELL, Jari, 02720 Espoo (FI)
(74) Representative: Nokia Corporation

(57) **Abstract**

An apparatus comprising measurement circuitry configured to measure reflection by an antenna of a radio frequency signal provided to the antenna via a first path; and control circuitry configured to control, in dependence on the measurement performed by the measurement circuitry, a first impedance coupling the first path and the antenna and a second different impedance coupling a different second path and the antenna or a different antenna.

## Description

### TECHNOLOGICAL FIELD

Embodiments of the present invention relate to an apparatus and/or a method and/or a system for controlling an impedance coupled to an antenna. In particular, they relate to an apparatus and/or a method and/or a system for controlling an impedance coupled to an antenna in a multichannel radio communication system.

### BACKGROUND

It is well understood in the art of telecommunications that in order to transfer a radio frequency signal from one component to another component efficiently it is important that the two components have matched impedances. That is, the output impedance of the first component that transmits the radio frequency signal should be matched to the input impedance of the second component that receives the radio frequency signal.

If the output impedance Zₒ and the input impedance Zᵢ are exactly matched (Zₒ = Zᵢ) then all of the radio frequency signal is absorbed by the second component. If however there is a difference between the output impedance Zₒ and the input impedance Zᵢ then a proportion of the radio frequency signal is reflected by the second component. Impedance matching implies that the difference between the input impedance and the output impedance is small but not necessarily zero.

The output impedance and the input impedance are complex values that typically vary differently with frequency. If the output impedance of the first component is varied to match the input impedance of the second component at a first frequency then it may not match the input impedance of the second component at a second frequency different to the first frequency.

Where the second component is an antenna, the input impedance of the second component may be dependent upon a context of the antenna. For example, moving the antenna relative to a user's body, for example raising it to the user's head or placing it in a user's pocket may change the input impedance to the second component.

It will therefore be appreciated that impedance matching of an antenna is both context dependent and frequency dependent.

### BRIEF SUMMARY

According to various, but not necessarily all, embodiments of the invention there is provided an apparatus comprising: measurement circuitry configured to measure reflection by an antenna of a radio frequency signal provided to the antenna via a first path; and control circuitry configured to control, in dependence on the measurement performed by the measurement circuitry, a first impedance coupling the first path and the antenna and a second different impedance coupling a different second path and the antenna or a different antenna.

According to various, but not necessarily all, embodiments of the invention there is provided examples as claimed in the appended claims.

### BRIEF DESCRIPTION

For a better understanding of various examples that are useful for understanding the detailed description, reference will now be made by way of example only to the accompanying drawings in which:
Fig 1A illustrates an example of a system that is configured to control at least a first impedance that is coupled to an antenna and a second impedance that is coupled to the antenna;
Fig 1B illustrates an example of a system that is configured to control at least a first impedance that is coupled to an antenna and a second impedance that is coupled to a different antenna;
Fig 2 illustrates an example of impedance control circuitry comprising a look-up table;
Fig 3 illustrates an example of a system that is configured to control at least a first impedance that is coupled to an antenna and a second impedance that is coupled to the antenna or a different antenna;
Fig 4 illustrates an example of a system that is configured to control at least a first impedance that is coupled to an antenna and a second impedance that is coupled to the antenna or a different antenna;
Fig 5 illustrates an example of a method that may be performed by a system that is configured to control at least a first impedance that is coupled to an antenna and a second impedance that is coupled to the antenna or a different antenna; and
Fig 6 illustrates an example of an apparatus, comprising a system that is configured to control at least a first impedance that is coupled to an antenna and a second impedance that is coupled to the antenna or a different antenna.

### DETAILED DESCRIPTION

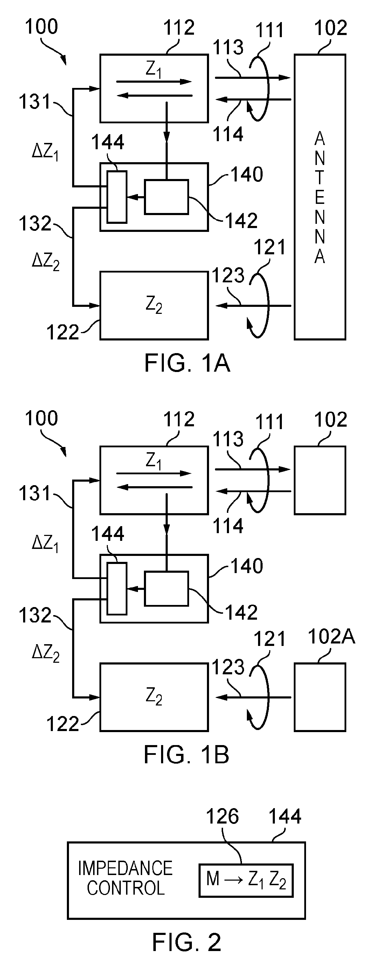

Fig 1A illustrates a system 100 that is configured to control a first impedance Z₁ coupled to an antenna 102. The system 100 measures the internal reflection of a radio frequency signal sent to an antenna 102 for transmission in a first communications channel and then uses this measurement to control a second impedance Z₂ that is coupled to the antenna 102 to improve reception of radio frequency signals in a second communications channel, different to the first communications channel.

The measurement of the internal reflection of a radio frequency signal transmitted in one communication channel is therefore used to control the impedance for a second different communication channel which is receiving only. As the second communication channel is receiving only, it is not possible to measure the reflection of a radio frequency signal transmitted from the antenna 102 in the second communications channel. The proper and correct impedance value for coupling to the antenna 102 for efficient reception of radio frequency signals in the second communications channel is inferred from the measurement of the internal reflection, by the antenna 102, of the radio frequency signal transmitted in the first communications channel.

The system 100 comprises a first impedance tuner 112 which is coupled via a first path 111 to an antenna 102, and a second impedance tuner 122 which is coupled via a second path 121 to the antenna 102.

The system 100 comprises control circuitry 140 which includes measurement circuitry 142 and impedance control circuitry 144. The impedance control circuitry 144 is coupled to the first impedance tuner 112 and is configured to control a value of the first impedance Z₁ of the first impedance tuner 112. The impedance control circuitry 144 is also coupled to the second impedance tuner 122 and is configured to control a value of a second impedance Z₂ of the second impedance tuner 122.

The system 100 transmits a radio frequency signal 113 along the first path 111 from the first impedance tuner 112 to the antenna 102. If the output impedance of the first impedance tuner 112 and the input impedance of the antenna 102 are not matched, then a proportion of the radio frequency signal 113 propagating in the forward direction from the first impedance tuner 112 to the antenna 102 is reflected back by the antenna 102 and returns as reflected radio frequency signal 114 along the first path 111 in a reverse direction from the antenna 102 towards the first impedance tuner 112. This reflected radio frequency signal 114 is measured by the measurement circuitry 142.

The impedance control circuitry 144 is configured to control, in dependence on the measurement of the reflected radio frequency signal 114 made by the measurement circuitry 142, the first impedance Z₁ coupling the first path 111 and the antenna 102 and is configured to separately control the different second impedance Z₂ coupling the second path 121 and the antenna 102. The impedance control circuitry 144, for example, provides a first control signal 131 to the first impedance tuner 112 changing a value of the first impedance Z₁ of the first impedance tuner 112 and a second control signal 132 to the second impedance tuner 122 changing a value of the second impedance Z₂ of the second impedance tuner 122.

Fig 1B is similar to Fig 1A and also describes a system 100. This system 100 differs from the system 100 illustrated in Fig 1A in that in Fig 1A, the first path 111 and the second path 121 are coupled to the same antenna 102 via different antenna feeds. In the example of Fig 1B, the first path 111 is coupled to a first antenna 102 and the second path is coupled to a second, different antenna 102A. Otherwise, the operation of the system 100 is the same as the operation of the system 100 illustrated in Fig 1A and the description of its operation will not therefore be repeated.

It will be appreciated from the foregoing description of Fig 1A and Fig 1B, that a closed measurement-control loop is used by the system 100. The closed loop in the forward sense comprises the first control signal 131 from the impedance control circuitry 144 which controls a change in the first impedance Z₁ of the first impedance tuner 112. This change in the first impedance causes a change in the proportion of the transmitted radio frequency signal 113, provided by the first impedance tuner 112 to the antenna 102, that is reflected as reflected radio frequency signal 114. The reflected radio frequency signal 114 is measured by the measurement circuitry 142 and this, in turn, controls the impedance control circuitry 144 to vary the first impedance Z₁ of the first impedance tuner 112 and, in addition, the second impedance Z₂ of the second impedance tuner 122. This closes the loop. In this way, better matching is achieved between the second impedance tuner 122 and the antenna 102 or the different antenna 102A (Fig 1 B).

The closed measurement-control loop is therefore used for the first communication channel, where there is transmission, to control the first impedance Z₁ for the first communication channel but also control the second impedance Z₂ for the second communication channel where there is no transmission. The first communication channel and the second communication channel may operate at different frequency bands. The second path 121 illustrated in Figs 1A, 1B is configured for both transmission and reception. However, during the time period illustrated in the Figs 1A, 1B, the second path 121 is being used only for reception and is not being used for transmission.

In some but not necessarily all embodiments, the closed measurement-control loop may be iterated (repeated), changing the first impedance Z₁, with each iteration, until an optimum target value of the first impedance Z₁ is obtained. This multi-step iteration may be described as tuning the first impedance Z₁. Tuning may occur as a post-manufacturing step, as a real-time process during user operation. Once the optimum target value of the first impedance Z₁ is obtained, the associated target value for the second impedance Z₂ is determined. These target values are then used by the impedance control circuitry 144 to change the first impedance Z₁ of the first impedance tuner 112 to the target value of the first impedance Z₁ and to change the second impedance Z₂ of the second impedance tuner 122 to the target value of the second impedance Z₂.

In other embodiments, the closed measurement-control loop may provide a single measurement that is associated with target values of the first impedance Z₁ and the second impedance Z₂. These target values are then used by the impedance control circuitry 144 to change the first impedance Z₁ of the first impedance tuner 112 to the target value of the first impedance Z₁ and to change the second impedance Z₂ of the second impedance tuner 122 to the target value of the second impedance Z₂. The single measurement may, for example, be measured at a reference value of the first impedance Z₁. The single measurement value may be converted to one, for example a nearest one, of a plurality of predetermined values.

The target values of the first impedance Z₁ and the second impedance Z₂, whether determined by single measurement or tuning, are context dependent. The target value may, for example, be adapted in real time to take account of real time changes to context.

The context is dependent upon the situation in which the antenna 102 or antennas 102, 102A are used. This context may change in real time for example as the system 100 is moved closer to or further from a user's body.

Examples of different contexts include, where the system 100 is comprised in a hand-portable device: device-human interaction contexts which change, for example, when the system 100 is in free-space, is in a user's hand, is held at the side of a user's head or is within a trouser or jacket pocket of a user; device configuration contexts which change as the configuration of the device is changed, for example, if the device is folded or a slide is opened or closed; device proximal environment contexts which change when the device is placed adjacent a metal or conducting surface or close to parts of the user's body such as in the user's hand, next to the user's head, in the user's jacket or trouser pocket.

The system 100 is in free-space when the system 100 is physically located far enough away from the user and/or conductive/absorptive objects so that radiation efficiency of one or more antenna is not degraded significantly. Significant degradation could be, as one example, more than a loss L dB of radiated efficiency, where L is a specified value dependent upon the need to control antenna gain and efficiency. In some but not necessarily all example L is or is 1 dB or is of the order 1 dB.

The measurement circuitry 142 may, for example, measure the reflection coefficient R of the transmitted radio frequency signal 113. In some embodiments, the reflection coefficient R may be measured as a complex value and in other embodiments the reflection coefficient may be measured only as a real value. The measurement circuitry 142 may, in other examples, measure the Voltage Standing Wave Ratio (VSWR) return loss, reflection loss or other parameters dependent upon reflection/impedance matching.

The measurement circuitry 142 determines the context dependent parameter from the measurement of reflection by the antenna 102 of the transmitted radio frequency signal 113. The impedance control circuitry 144 then uses this context-dependant parameter to control both the first impedance Z₁ and the second impedance Z₂.

Where the target values of the first impedance Z₁ and the second impedance Z₂ are determined by single measurement the context dependent parameter may be the measurement, for example, the reflection coefficient R and a current first impedance Z₁ value or the reflection coefficient R measured at a reference value of the first impedance Z₁ The reflection coefficient R value may be converted to one, for example a nearest one, of a plurality of predetermined values.

Where the target values of the first impedance Z₁ and the second impedance Z₂ are determined by tuning, the context dependent parameter may be the target first impedance Z₁.

This context-dependent parameter may, for example, be unique for a particular frequency of the transmitted radio frequency signal 113 and for a particular context and may be used, in real time, to determine the pair of target values for the first impedance Z₁ and the second impedance Z₂

Fig 2 illustrates an example of impedance control circuitry 144 comprising a look-up table 126.

Where the first impedance Z₁ is determined by tuning, it may be used as an address to look up the correct pair of target values of the first impedance Z₁ and the second impedance Z₂ in a look-up table 126 that comprises pairs of target values of the first impedance Z₁ and the second impedance Z₂ for each possible different context.

Where the target values of the first impedance Z₁ and the second impedance Z₂ are determined by single measurement of a context-dependent parameter such as, for example, the reflection coefficient R, the context-dependent parameter may be used as an address to look up the correct pair of target values of the first impedance Z₁ and the second impedance Z₂ in a look-up table 126 that comprises pairs of target values of the first impedance Z₁ and the second impedance Z₂ for each possible different context, where each pair is addressed by different values of the context-dependent parameter.

Each one of multiple different context-dependent parameter values is associated with a different set of target first impedance Z₁ and second impedance Z₂. A different context-dependent parameter value therefore addresses a different set of target first impedance Z₁ and second impedance Z₂. Each of the sets of target first impedance Z₁ and second impedance Z₂ have values that have been determined to be optimal for the context identified by the associated context-dependent parameter.

The look-up table 126 maps each particular context-dependent parameter value (target first impedance/ R) determined using the measurement circuitry 144 to a particular set of target impedance values for the impedance tuners associated with the particular context-dependent parameter value.

Changing the context of the system 100 changes the measurement which then changes the first control signal 131 provided by the impedance control circuitry 144 to control the first impedance Z₁ of the first impedance tuner 112 to have the target first impedance Z₁ and changes the second control signal 132 provided by the impedance control circuitry 144 to control the second impedance Z₂ of the second impedance tuner 122 to have the target second impedance Z₂.

The look-up table 126 may be a predetermined look-up table. It may, for example, be stored into the system 100 at manufacture or before distribution to a user. Alternatively or additionally, the look-up table may be updatable automatically during use by the user, for example, via wireless download via the antenna 102 or different antenna 102A or alternatively by using an algorithm which "learns" (without the need for user interaction or download) about how the system 100 is being used and consequently modifies the lookup table constantly in real time as system learns about how it is used.

In other examples, instead of a look-up table 126, some form of calculation may be used to convert a particular context-dependent parameter value (target first impedance/ R) to a particular pair of target first impedance Z₁ and second impedance Z₂. For example, a complex reflection coefficient may identify a position on a Smith chart of the antenna 102 for the first communication channel for a particular context allowing the first impedance Z₁ to be calculated and using the association of a position on a Smith chart of antenna 102 to position of antenna 102A may enable the second impedance Z₂ to be calculated.

In the above-described look-up table 126, which is a simplified version, it has been assumed that a measurement in relation to the first communication channel, for a particular context, provides a set of target values for the impedances of the first communication channel and the second communication channel. It should be appreciated that the set of target values may provide values for the impedances of other communication channels.

It should be appreciated that the look up of the look-up table although described in the above example in relation to a context-dependent parameter determined by measurement in the first communication channel may actually occur in relation to a context-dependent parameter determined by measurement in any communication channel that transmits a radio frequency signal. Therefore the measurement of reflection by the antenna 102 of a radio transmission signal provided to the antenna 102 may be in relation to any arbitrary communication channel and the context-dependent parameter determined by the measurement may be used as a look-up value to obtain target impedance values for that communication channel but also multiple other different communication channels.

The look-up table 126 may be created by calibrating the system 100 for different contexts. For example, for a particular context the various optimum impedance values, for example the target first impedance Z₁ and second impedance Z₂ may be determined. It may also be determined what context-dependent parameter for each of the various different communication channels would identify this context.

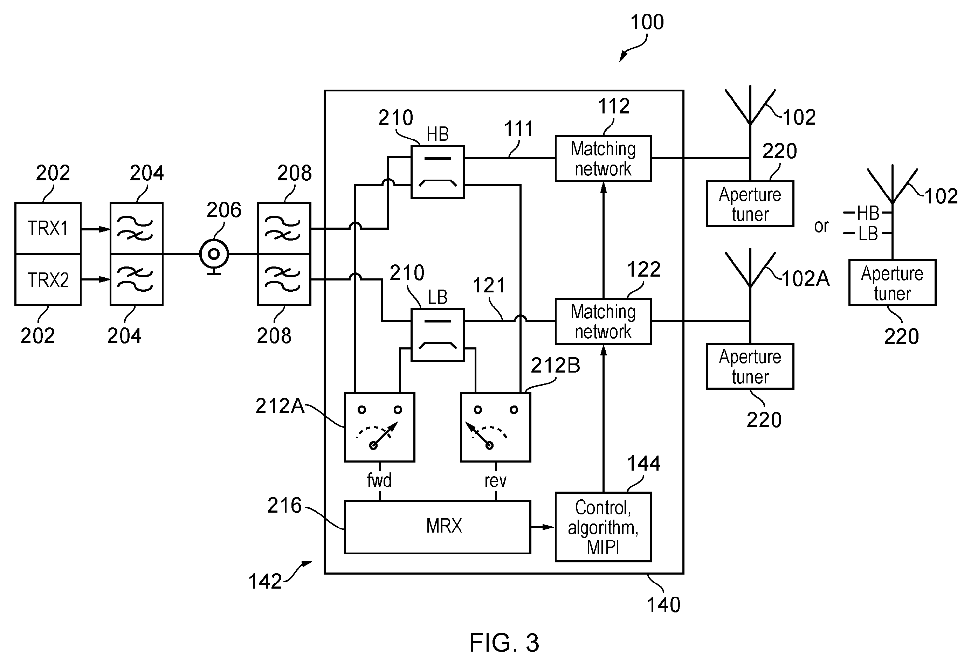

Fig 3 illustrates an example of the system 100 according to a particular implementation. The figure illustrates a system 100 similar to that illustrated in Figs 1A and 1B. In this example, the first communication channel associated with the first path 111 is a higher frequency band (HB) and the second communication channel associated with the second path 121 is a lower frequency band (LB).

The first communication channel has an associated transceiver 202 which in combination with the radio frequency circuitry 204, 206, 208 produces a radio frequency signal 133 (not illustrated in Fig 3) that has a selected high frequency and which passes through a first directional coupler 210 before reaching a matching network operating as the first impedance tuner 112. The matching network couples the radio frequency signal via the first path 111 to the antenna 102, the aperture of which may be tuned using aperture tuner 220.

The second communication channel has an associated transceiver 202 which in combination with the radio frequency circuitry 204, 206, 208 produces a radio frequency signal 133 (not illustrated in Fig 3) that has a selected low frequency and which passes through a second directional coupler 210 before reaching a matching network operating as the second impedance tuner 122. The matching network couples the radio frequency signal via the second path 121 to the antenna 102 (or the antenna 102A), the aperture of which may be tuned using aperture tuner 220.

The measurement circuitry 142 comprises the first directional coupler 210 associated with the first communication channel and the second directional coupler 210 associated with the second communication channel.

When the first communication channel is transmitting and the second communication channel is not transmitting but is receiving, then the measurement circuitry 142 measures reflection by the antenna 102 of the radio frequency signal transmitted in the forward direction through the first directional coupler 210. As the radio frequency signal passes in the forward direction, the directional coupler 210 couples a proportion of its energy to circuitry 216 via the switch 212A. The signal reflected by the antenna 102 passes in a reverse direction through the first directional coupler 210 and a proportion of this signal is coupled through the switch 212B to the circuitry 216. The circuitry 216 measures the relationship between the coupled forward signal and the coupled reverse signal and can therefore calculate the reflection coefficient for the first communication channel.

This calculation may provide a complex value where the amplitude and phase of the coupled forward signal and the coupled reverse signal are measured. This calculation may provide a real value where only the amplitude (not the phase) of the coupled forward signal and the coupled reverse signal are measured.

The measurement of the reflection coefficient is then used as described above by the impedance control circuitry 144 to control the matching network operating as the first impedance tuner 112 to have a first target impedance and also the matching network operating as the second impedance tuner 122 to have a second target impedance.

In this example the configuration of the switches 212A and 212B may be changed to allow for the measurement of reflection to occur in relation to the second communication channel instead of the first communication channel. In this scenario the switches 212A and 212B are thrown in the opposite direction so that the measurement of the forward signal and the reflected reverse signal occurs in relation to the second communication channel.

It should be appreciated that this is only one particular arrangement and may be used for sampling forward and reverse signals in either one of two communication channels. It is of course possible to have various different arrangements for permanently or selectively sampling the forward and reverse signals on a particular communication channel.

In the examples described above, the first communication channel is a particular frequency band and the second communication channel is a different frequency band. A "band" is an allocation of continuous electromagnetic (EM) spectrum defined by a telecommunication standard that has a defined size and position in the EM spectrum. Each band may have different performance requirements e.g. access type (frequency division duplex FDD or time division duplex TDD), bandwidth or other requirements. For example, according to long term evolution (LTE) a band may be, for example, positioned between 700 MHz and 2600 MHz. It is therefore possible for one band to include a harmonic of another band, e.g. LTE band 4 (2130 MHz DL) includes a harmonic of LTE band 7 (710 MHz UL).

A carrier is a single frequency, usually a continuous wave. When the carrier is modulated it is then carrying information/data, the components, in terms of sidebands. Such component carriers can be aggregated to form a data communication channel. Intra-band aggregation involves contiguous or non-contiguous component carriers within a single band. Inter-band aggregation involves non-contiguous component carriers within different bands. A component carrier within a band must obey the requirements of that band.

It is therefore possible for the first communication channel to be a data communication channel (or to be part of a data communication channel) that has an intra- or inter-band carrier aggregation configuration. In this case the first communication channel may comprise a plurality of carriers. The measurement circuitry 216 may be configured to measure the reflection of some or all of these carriers.

In the examples given above the first communication channel associated with the first path 111 may be or may be part of a first LTE frequency band and the second communication channel associated with the second path 121 may be or may be part of a second different LTE frequency band. The first path 111 is coupled to the antenna 102 via the variable impedance matching network 112 and the second path 121 is coupled to the antenna 102 or additional antenna 102A via a different variable impedance matching network 122. The variable impedance matching network 112 associated with the first path 111 is independently controlled by the impedance control circuitry 144 and the variable impedance matching network 122 associated with the second path 121 is independently controlled by the impedance control circuitry 144.

In the circumstance where the transceivers 202 are used for carrier aggregation, they may in fact comprise a plurality of transceivers each designed to operate at a particular component carrier frequency, where the outputs of the multiple transceivers are selectively combined to form aggregate carriers within the particular frequency band.

It is therefore possible for the first communication channel and the second communication channel to be used simultaneously to form a data communication channel defined by an inter-band non-contiguous carrier aggregation configuration. The first impedance Z₁ is used for transmission in the data transmission channel defined by the inter-band non-contiguous carrier aggregation configuration and the second impedance Z₂ is used for reception in a reception channel defined by the inter-band non-contiguous carrier aggregation configuration.

The transmission channel may be an intra-band channel comprising a component carrier or multiple contiguous component carriers in a first frequency band and the reception channel may be an intra-band channel comprising a component carrier or multiple contiguous component carriers in a second frequency band different to the first frequency band.

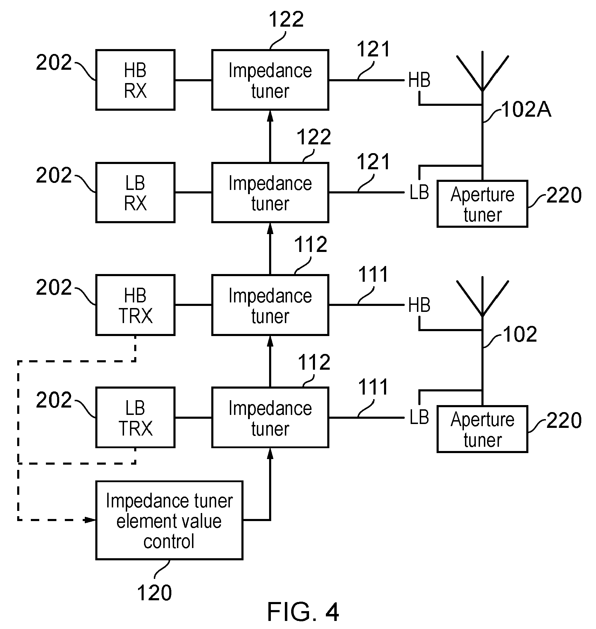

Fig 4 illustrates an example of a system 100, which may operate in the same manner as the system 100 described in relation to any of Figs 1 to 3. This figure illustrates a system 100 operating using a carrier aggregation configuration.

In this example, the data communications channel is formed by the aggregation of reception only sub-channels (HB RX, LB RX) and transmitting sub-channels (HB TRX, LB TRX). The carrier aggregation is, in this example, an inter-band non-contiguous carrier aggregation configuration, however, other configurations are possible. The transmitting channels may, individually, be transmission only or may be used for transmission and reception. Reception only blocks (HB RX and LB RX) may be used as diversity branches for transmission and reception branches HB TRX and LB TRX.

One of the reception only sub-channels (HB RX) operates at a particular carrier frequency (or contiguous carrier frequencies) f_{HB_RX} in a first band (HB). It is an intra-band sub-channel.

One of the reception only sub-channels (LB RX) operates at a particular carrier frequency (or contiguous carrier frequencies) f_{LB_RX} in a second band (LB). It is an intra-band sub-channel.

One of the transmitting sub-channels (HB TRX) operates at a particular carrier frequency (or contiguous carrier frequencies) f_{HB_TRX} in a first band (HB). It is an intra-band sub-channel.

One of the transmitting sub-channels (LB TRX) operates at a particular carrier frequency (or contiguous carrier frequencies) f_{LB_TRX} in a second band (LB). It is an intra-band sub-channel.

The particular carrier frequency (or contiguous carrier frequencies) f_{HB_RX} in the first band (HB) may or may not be contiguous with the particular carrier frequency (or contiguous carrier frequencies) f_{HB_TRX} in the first band (HB).

The particular carrier frequency (or contiguous carrier frequencies) f_{LB_RX} in the second band (LB) may or may not be contiguous with the particular carrier frequency (or contiguous carrier frequencies) f_{LB_TRX} in the second band (LB).

As this is an inter-band carrier aggregation configuration, the particular carrier frequencies (or contiguous carrier frequencies) f_{HB_RX} & f_{HB_TRX} in the first band (HB) are not contiguous with the particular carrier frequencies (or contiguous carrier frequencies) f_{LB_RX} & f_{LB_TRX} in the second band (LB).

The transmitting sub-channel (HB TRX) of the first band may be used as the first communication channel, where the measurement of the reflected radio frequency signal is made.

In this case measurement is used to not only determine the impedance of the impedance tuner associated with transmitting sub-channel (HB TRX) but also the impedance of the impedance tuner associated with receiving sub-channel (HB RX). It may also be used to determine the impedance of the impedance tuner associated with transmitting sub-channel (LB TRX) and the impedance of the impedance tuner associated with receiving sub-channel (LB RX).

Alternatively, or in addition, the transmitting sub-channel (LB TRX) of the second band may be used as the first communication channel, where the measurement of the reflected radio frequency signal is made.

In this case measurement is used to not only determine the impedance of the impedance tuner associated with transmitting sub-channel (LB TRX) but also the impedance of the impedance tuner associated with receiving sub-channel (LB RX). It may also be used to determine the impedance of the impedance tuner associated with transmitting sub-channel (HB TRX) and the impedance of the impedance tuner associated with receiving sub-channel (HB RX), if not separately determined by a measurement in the transmitting sub-channel (HB TRX).

It is therefore possible for the first communication channel and the second communication channel to be used simultaneously to form a data communication channel defined by an inter-band non-contiguous carrier aggregation configuration. The first impedance Z₁ is used for transmission in the data transmission channel defined by the inter-band non-contiguous carrier aggregation configuration and the second impedance Z₂ is used for reception in a reception channel defined by the inter-band non-contiguous carrier aggregation configuration. The transmission channel is an intra-band channel comprising a component carrier or multiple contiguous component carriers in a first frequency band and the reception channel is an intra-band channel comprising a component carrier or multiple contiguous component carriers in a second frequency band different to the first frequency band.

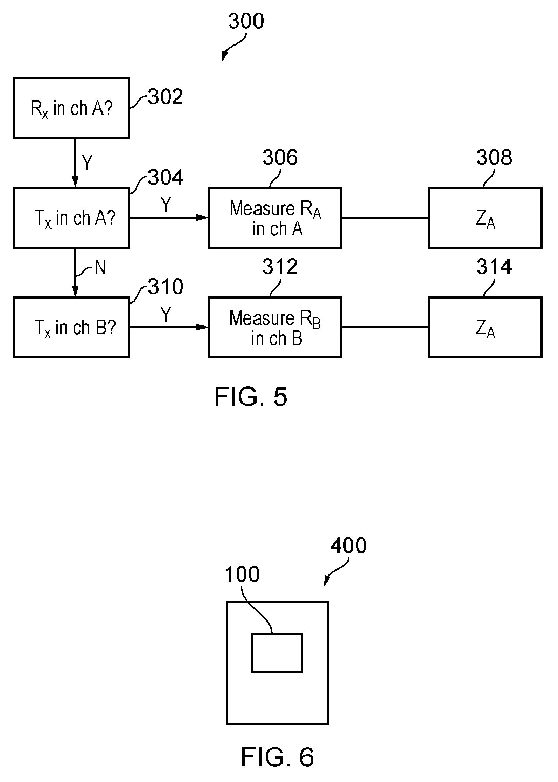

Fig 5 illustrates an example of a method 300 that may be performed by the system 100.

At block 302, the system determines whether or not a particular channel chA (frequency band, carrier or intra-band contiguous aggregation of carriers) is being used for reception. If it is, the method 300 moves to block 304 to determine the impedance of the impedance tuner used for that reception.

Next at block 304, the system determines whether or not the particular channel chA (frequency band, carrier or intra-band contiguous aggregation of carriers) is being used for transmission. If the channel chA is used for transmission, the method 300 moves to block 306, where the system 100 determines the impedance of the impedance tuner used for the channel chA by performing a measurement in the particular channel chA. If the channel chA is not used for transmission, the method 300 moves to block 310.

At block 306, the system 100 measures reflection by the antenna of a radio frequency signal provided to the antenna for transmission in the channel ChA. Next at block 308, the system 100 may then determine the optimum impedance of the impedance tuner used for that transmission, by for example, tuning the impedance to an optimum value or looking up a value based on the measurement, as described above.

At block 310, the system 100 finds a particular channel chB (frequency band, carrier or intra-band contiguous aggregation of carriers) that is being used for transmission. The method then moves to block 312 so that the system can determine the impedance of the impedance tuner used for reception in the channel chA by performing a measurement in a different channel chB.

At block 312, the system 100 measures reflection by the antenna of a radio frequency signal provided to the antenna for transmission in the channel ChB. Next at block 314, the system 100 may then determine the optimum impedance of the impedance tuner used for transmission in the channel ChB, by for example, tuning the impedance to an optimum value or looking up a value based on the measurement, as described above. The system 100 may also determine the optimum impedance of the impedance tuner used for reception in the channel ChA by looking up a value based on the context-dependent parameter determined by the measurement in the channel ChB, as described above.

The channel chA and the channel chB may, in some examples, be different LTE channels used in an inter-band carrier aggregation configuration.

The channel chA and the channel chB may, in some examples, be different LTE carriers or contiguous groups of carriers used in an intra-band carrier aggregation configuration.

Fig 6 illustrates an example of an apparatus 400, in this example a portable electronic apparatus, comprising the system 100. The portable electronic apparatus 100 may, in some examples, be a hand-portable electronic apparatus that is sized to be carried in a palm of a hand and fit within a suit jacket inside pocket.

Circuitry such as control circuitry 140, measurement circuitry 142 and impedance control circuitry 144 may be implemented in hardware alone, have certain aspects in software including firmware alone or can be a combination of hardware and software (including firmware).

Circuitry may be implemented using instructions that enable hardware functionality, for example, by using executable instructions of a computer program in a general-purpose or special-purpose processor that may be stored on a computer readable storage medium (disk, memory etc) to be executed by such a processor.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions and
(c) to circuits, such as a microprocessor(s) or a portion of a microprocessor(s), that require software or firmware for operation, even if the software or firmware is not physically present. This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

The blocks illustrated in the Fig 5 may represent steps in a method and/or sections of code in the computer program. The illustration of a particular order to the blocks does not necessarily imply that there is a required or preferred order for the blocks and the order and arrangement of the block may be varied. Furthermore, it may be possible for some blocks to be omitted.

The term 'coupled' or 'couple' or a similar term means functionally or physically interconnected with any number or combination of intervening elements (including no intervening elements).

Where a structural feature has been described, it may be replaced by means for performing one or more of the functions of the structural feature whether that function or those functions are explicitly or implicitly described.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this brief description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples. Thus 'example', 'for example' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus comprising:
measurement circuitry configured to measure reflection by an antenna of a radio frequency signal provided to the antenna via a first path; and
control circuitry configured to control, in dependence on the measurement performed by the measurement circuitry, a first impedance coupling the first path and the antenna and a second different impedance coupling a different second path and the antenna or a different antenna.

2. An apparatus as claimed in claim 1, wherein the control circuitry is configured to control the second impedance coupling the second path and the antenna or the different antenna, while the first path is used for radio frequency signal transmission and the second path is used for only radio frequency signal reception.

3. An apparatus as claimed in claim 1 or claim 2, wherein the measurement circuitry is configured to determine, in real time, a use context of the apparatus, and wherein the determined use context of the apparatus is used by the control circuitry to define at least a pair of impedance values comprising the first impedance and the second impedance.

4. An apparatus as claimed in claim 3, wherein the use context of the apparatus is an apparatus-human interaction context that changes with changes in proximity of the antenna to a human body.

5. An apparatus as claimed in any preceding claim, wherein the control circuitry is configured, in dependence upon the measurement, to control the second impedance to have a particular one of a set of multiple second values.

6. An apparatus as claimed in claim 5, wherein the control circuitry is configured to tune, in dependence upon at least the measurement, the first impedance to have a particular one of a set of multiple first values that references one of a plurality of pairs of impedance values for the first impedance and the second impedance.

7. An apparatus as claimed in any preceding claim, wherein the measurement circuitry determines a context-dependent parameter which references a set of multiple impedance values including the first impedance and the second impedance.

8. An apparatus as claimed in any preceding claim, wherein the first path is configured to transmit and/or receive radio frequency signals in a first frequency band and wherein the second path is configured to transmit and/or receive radio frequency signals in a second frequency band, distinct from the first frequency band.

9. An apparatus as claimed in claim 8, wherein the first frequency band and the second frequency band are different long term evolution (LTE) frequency bands.

10. An apparatus as claimed in any preceding claim, wherein the first path is coupled to a first variable impedance network configured to control the first impedance and wherein the second path is coupled to a second variable impedance network, different to and controlled separately to the first variable impedance network, configured to control the second impedance.

11. An apparatus as claimed in any preceding claim, wherein the first path is coupled to one or more first radio transceivers and wherein the second path is coupled to one or more second radio transceivers separate to the first radio transceivers.

12. An apparatus as claimed in claim 11, wherein the one or more first radio transceivers are configured for use with different long term evolution (LTE) component carriers within a first LTE frequency band and wherein the one or more second radio transceivers are configured for use with different LTE component carriers within a second LTE frequency band.

13. An apparatus as claimed in any preceding claim, wherein the first impedance is used for transmission in a transmission channel defined by an inter-band non-contiguous carrier aggregation configuration, and wherein the second impedance is used for reception in a reception channel defined by the inter-band non-contiguous carrier aggregation configuration..

14. A method comprising:
providing for measurement of reflection of an antenna by a radio transmission signal provided to the antenna via a first path; and in dependence on the measurement, controlling a first impedance coupling the first path and the antenna and separately controlling a different second impedance coupling a different second path and the antenna or a different antenna.

15. A hand portable electronic device configured as the apparatus of any of claims 1 to 13.
